(19) Europäisches Patentamt
European Patent Office
Office européen des brevets

(11) **EP 2 816 381 A1**

(12) **EUROPEAN PATENT APPLICATION**
published in accordance with Art. 153(4) EPC

(43) Date of publication:
**24.12.2014 Bulletin 2014/52**

(21) Application number: **13749193.2**

(22) Date of filing: **15.02.2013**

(51) Int Cl.:
***G02B 5/26*** *(2006.01)* ***B05D 3/06*** *(2006.01)*
***B32B 27/16*** *(2006.01)*

(86) International application number:
**PCT/JP2013/053747**

(87) International publication number:
**WO 2013/122227 (22.08.2013 Gazette 2013/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.02.2012 JP 2012031749**
**13.02.2013 JP 2013025799**

(71) Applicant: **Nitto Denko Corporation**
**Ibaraki-shi, Osaka 567-8680 (JP)**

(72) Inventors:
- **FUJISAWA, Junichi**
**Ibaraki-shi**
**Osaka 567-8680 (JP)**
- **KAWASAKI, Motoko**
**Ibaraki-shi**
**Osaka 567-8680 (JP)**
- **OHMORI, Yutaka**
**Ibaraki-shi**
**Osaka 567-8680 (JP)**

(74) Representative: **Stolmár & Partner**
**Blumenstraße 17**
**80331 München (DE)**

# (54) METHOD FOR MANUFACTURING INFRARED-REFLECTIVE SUBSTRATE

(57) Provided is a method for producing an infrared reflective substrate including a reflective layer and a protective layer that are layered with each other. The method includes: a step of layering the reflective layer with the protective layer containing a polymer that is cross-linkable by electron beam irradiation; and a step of subjecting the protective layer to electron beam irradiation.

Fig. 1

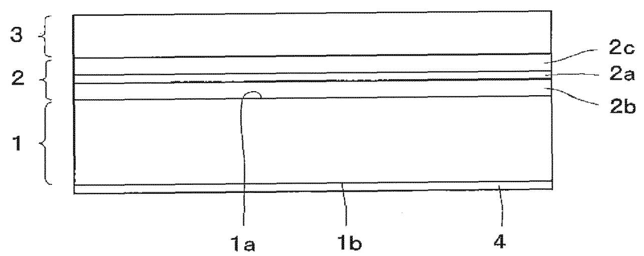


EP 2 816 381 A1

Printed by Jouve, 75001 PARIS (FR)

## Description

FIELD

The present invention relates to a method for producing an infrared reflective substrate having high transmittance in a visible light region and having high reflectivity in an infrared light region.

BACKGROUND

Infrared reflective substrates are mainly used for suppressing thermal effects of sunlight radiation. For example, by attaching an infrared reflective substrate to a window glass of buildings, motor vehicles, etc., it is possible to block infrared radiation (particularly near infrared radiation) entering the indoor passing through the window glass so as to suppress an increase in the indoor temperature, which can enhance energy saving by suppressing the consumption power for cooling.

For reflecting infrared radiation, an infrared reflective layer having a layer structure of metal or metal oxide is used. However, metal or metal oxide has a low abrasion resistance. Therefore, a protective layer is generally provided on an infrared reflective layer in infrared reflective substrates. For example, Patent Literature 1 discloses use of polyacrylonitrile (PAN) as a material for a protective layer. Polymers such as polyacrylonitrile having a low absorbance of infrared radiation can block far infrared radiation outgoing from the indoor passing through a translucent member, which therefore can further enhance energy saving due to a heat insulating effect during winter or night when the outdoor temperature decreases.

In the case of using such a polymer as polyacrylonitrile as a material for a protective layer, the protective layer is formed by a procedure in which a solution is first prepared by dissolving the polymer in a solvent, and the thus obtained solution is applied onto an infrared reflective layer, followed by drying the solution (volatilizing the solvent).

CITATION LIST

Patent Literature

Patent Literature 1: JP 61(1986)-051762 B

SUMMARY

Technical Problem

Such an infrared reflective substrate of this type is attached to a window glass of buildings, motor vehicles, etc., with its protective layer on the front side. Accordingly, dirt, or the like, is deposited on the surface of the protective layer with time. In order to remove the dirt, or the like, the surface of the protective layer may be cleaned, for example, by wiping with a washing liquid. However, such a washing liquid often contains various organic solvents. In the case where at least one of organic solvents contained in the washing liquid is a solvent in which a polymer contained in the protective layer is soluble, the protective layer elutes during cleaning and is removed due to abrasion of wiping, etc., resulting in exposure of the infrared reflective layer having a low abrasion resistance, which is a problem.

Further, even in the case where the polymer contained in the protective layer is insoluble in the washing liquid, if the protective layer has a low resistance to physical abrasion, the protective layer is removed by wiping, etc., resulting also in exposure of the infrared reflective layer having a low abrasion resistance, as in the aforementioned case, which is a problem.

In this way, when the abrasion resistance of the protective layer, such as solvent resistance and resistance to physical abrasion is insufficient, it is difficult to sufficiently protect the infrared reflective layer.

Therefore, the present invention has been devised in view of such circumstances, and an object thereof is to provide a method for producing an infrared reflective substrate having excellent heat insulating properties and excellent abrasion resistance.

Solution to Problem

According to the present invention, a method for producing an infrared reflective substrate including a reflective layer and a protective layer that are layered with each other, includes: a step of layering the reflective layer with the protective layer containing a polymer that is cross-linked by electron beam irradiation; and a step of subjecting the protective layer to electron beam irradiation.

According to one aspect, the method for producing an infrared reflective substrate according to the present invention may be configured so that the infrared reflective substrate has the reflective layer, the protective layer, and further a backing, and the step of layering the reflective layer with the protective layer includes: a step of forming the reflective layer on one surface of the backing; and a step of forming the protective layer by applying a polymer composition solution obtained by dissolving the polymer in a solvent onto the reflective layer, followed by drying the solution.

According to another aspect, the method for producing an infrared reflective substrate according to the present invention may be configured so that the infrared reflective substrate has the reflective layer, the protective layer, and further a backing, and the step of layering the reflective layer with the protective layer includes: a step of forming the reflective layer on one surface of the backing; and a step of bonding the protective layer that is a film having the polymer and the reflective layer to each other.

In this case, it is preferable that the protective layer have a transmittance of far infrared radiation of 65% or more per 15-↔m thickness.

Here, the "transmittance of far infrared radiation" means an average value of transmittance of infrared radiation in a wavelength region of 2.5 ↔m to 25 ↔m by the protective layer when only the protective layer is irradiated with far infrared radiation.

In this case, it is preferable that the polymer exhibit a cross-linking reaction behavior by electron beam irradiation.

Conventionally, polymers are classified generally into polymers of cross-linking type in which cross-linking preferentially occurs, and polymers of collapsing (scission) type in which main chain scission preferentially occurs as the reaction, depending on the reaction induced by electron beam irradiation. The aforementioned phrase to "exhibit a cross-linking reaction behavior" means to exhibit a reaction behavior in which cross-linking preferentially occurs, of these two types of reaction behaviors.

In this case, it is preferable that the polymer be an olefin polymer or a cycloolefin polymer.

In this case, the polymer may contain at least two of the repetition units A, B, and C in Formula I below:

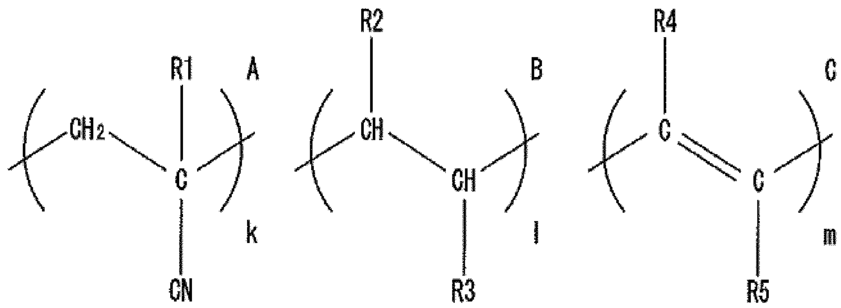

(R1: H or a methyl group, R2 to R5: H, or an alkyl group or an alkenyl group having 1 to 4 carbon atoms).

According to one aspect of the method for producing an infrared reflective substrate of the present invention, it is preferable that the protective layer before the electron beam irradiation further contain 1 part by weight to 20 parts by weight of radical polymerizable monomers with respect to 100 parts by weight of the polymer.

In this case, the protective layer after the electron beam irradiation may have a gel fraction of 70% or more.

In this case, the infrared reflective substrate may have a normal emissivity of 0.40 or less on a surface on the protective layer side.

Advantageous Effects of Invention

According to the present invention, it is possible to provide a method for producing an infrared reflective substrate having excellent heat insulating properties and excellent abrasion resistance.

BRIEF DESCRIPTION OF DRAWINGS

Fig.1 shows a schematic view for describing a layer structure of an infrared reflective substrate according to an embodiment of the present invention.

Fig. 2 shows a schematic view for describing a layer structure of an infrared reflective substrate according to another embodiment of the present invention.

Fig. 3 shows a schematic view for describing a layer structure of an infrared reflective substrate according to another embodiment of the present invention.

Fig. 4 shows a schematic view for describing a layer structure of an infrared reflective substrate according to another embodiment of the present invention.

DESCRIPTION OF EMBODIMENTS

First embodiment

Hereinafter, a first embodiment of the method for producing an infrared reflective substrate according to the present invention is described.

The method for producing an infrared reflective substrate according to this embodiment includes: a step of layering a reflective layer and a protective layer with each other; and a step of subjecting the protective layer to electron beam irradiation, wherein the infrared radiation substrate has the protective layer, the reflective layer, and further a backing, and the step of layering the reflective layer with the protective layer has a step of forming the reflective layer on one surface of the backing and a step of forming the protective layer by applying a polymer composition solution obtained by dissolving a polymer in a solvent onto the reflective layer, followed by drying the solution.

First, the layer structure of the infrared reflective substrate according to this embodiment is described with reference to Fig. 1. The infrared reflective substrate according to this embodiment has heat insulating properties (reflective properties for far infrared radiation), in addition to thermal barrier properties (reflective properties for near infrared radiation) of conventional infrared reflective substrates.

As shown in Fig. 1, the infrared reflective substrate according to this embodiment has a layer structure in which a reflective layer 2 and a protective layer 3 are layered in this order on one surface 1a of a backing 1, and a tacky layer 4 is provided on the other surface 1b thereof.

A polyester substrate is used for the backing 1. Examples thereof include substrates made of polyethylene terephthalate, polyethylene naphthalate, polypropylene terephthalate, polybutylene terephthalate, polycyclohexylenemethylene terephthalate, and a mixed resin of two or more of these. Among these, a polyethylene terephthalate (PET) substrate is preferable, and a biaxially stretched polyethylene terephthalate (PET) substrate is particularly suitable, from the viewpoint of performance.

The reflective layer 2 is a deposition layer that is formed on the surface (one surface) 1a of the backing 1 by vapor deposition. Examples of a method for forming a deposition layer include physical vapor deposition (PVD) such as sputtering, vacuum vapor deposition, and ion plating. In vacuum vapor deposition, a deposition material is heated and evaporated under vacuum by a method such as resistance heating, electron beam heating, laser beam heating, and arc discharge. Thus, the reflective layer 2 is formed on the backing 1. In sputtering, cations such as Ar+ accelerated, for example, by glow discharge are allowed to collide with a target (deposition material) so that the deposition material is sputtered and evaporated under vacuum in the presence of an inert gas such as argon. Thus, the reflective layer 2 is formed on the backing 1. Ion plating is a vapor deposition method combining vacuum vapor deposition and sputtering. In this method, evaporated atoms released by heating are ionized and accelerated in an electric field so as to attach onto the backing 1 in a high energy state under vacuum. Thus, the reflective layer 2 is formed.

The reflective layer 2 has a multilayer structure in which a semi-transparent metal layer 2a is sandwiched by a pair of metal oxide layers 2b and 2c. The reflective layer 2 is formed, using such a method for forming a deposition layer described above, by first vapor-depositing the metal oxide layer 2b onto the surface 1a (one surface) of the backing 1, thereafter vapor-depositing the semi-transparent metal layer 2a onto the metal oxide layer 2b, and finally vapor-depositing the metal oxide layer 2c onto the semi-transparent metal layer 2a. For the semi-transparent metal layer 2a, aluminum (Al), silver (Ag), silver alloy (MgAg, Ag-Pd-Cu alloy (APC), AgCu, AgAuCu, or the like), aluminum alloy (AlLi, AlCa, AlMg, or the like), or a metal material obtained by combining at least two types or two layers of these can be used, for example. The metal oxide layers 2b and 2c serve to give transparency to the reflective layer 2 and to prevent deterioration of the semi-transparent metal layer 2a. For example, oxides such as indium tin oxide (ITO), indium titanium oxide (IT), indium zinc oxide (IZO), gallium zinc oxide (GZO), aluminum zinc oxide (AZO), indium gallium oxide (IGO), or the like can be used therefor.

The protective layer 3 is a layer containing a polymer. When the protective layer 3 contains a polymer, cross-linking to be described later can be caused by radicalization or ionization of the polymer due to electron beam irradiation. Further, the polymer is preferably a polymer of the cross-linking type in which cross-linking preferentially occurs due to electron beam irradiation. Preferable examples of such a polymer of the cross-linking type include olefin polymers such as polyethylene and polypropylene, cycloolefin polymers such as polynorbornene, polystyrene, polyvinylidene fluoride, polymethyl acrylate, polyvinyl chloride, polybutadiene, natural rubber, polyvinyl alcohol, polyamide, acrylonitrile, a copolymer containing monomer components of these polymers as constituent units, and a hydride of the copolymer.

Among these, it is preferable that the polymer be an olefin polymer or a cycloolefin polymer. Further, it is also preferable that the polymer be a hydride of the aforementioned copolymer.

As the hydride, in the case of the copolymer having a double bond, a hydride obtained by partially hydrogenating

the double bond can be mentioned, for example. Examples of such a hydride include a polymer containing at least two of the repeating units A, B, and C in Formula I below. H or a methyl group can be used as R1 in Formula I. Further, H, or an alkyl group or an alkenyl group having 1 to 4 carbon atoms can be used as R2 to R5 in Formula I. Incidentally, a material that is composed of the repeating units A, B, and C, and uses H as R1 to R5 is hydrogenated nitrile rubber (HNBR).

Formula I:

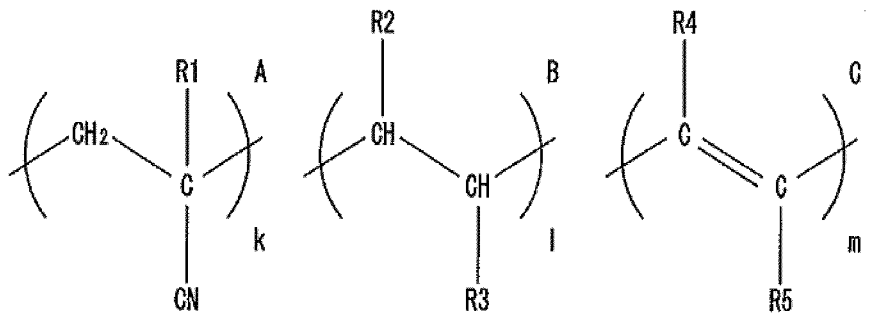

(R1: H or a methyl group, R2 to R5: H, or an alkyl group or an alkenyl group having 1 to 4 carbon atoms)

Examples of monomer components for obtaining such a polymer include acrylonitrile (repeating unit D) and its derivatives, alkyl (repeating unit E) having 4 carbon atoms and its derivatives, butadiene (repeating unit F1 or F2), and copolymers of those derivatives, as shown in Formula II. Here, R6 denotes H or a methyl group, and R7 to R18 each denote H or an alkyl group having 1 to 4 carbon atoms. F1 and F2 each denote a repeating unit in which butadiene is polymerized, where F1 is a main repeating unit. Further, the polymer may be nitrile rubber that is a copolymer of acrylonitrile (repeating unit D) and its derivatives, and 1,3-butadiene (repeating unit F1) and its derivatives, which are shown in Formula II, or hydrogenated nitrile rubber obtained by partially or entirely hydrogenating the double bond contained in nitrile rubber.

Formula II:

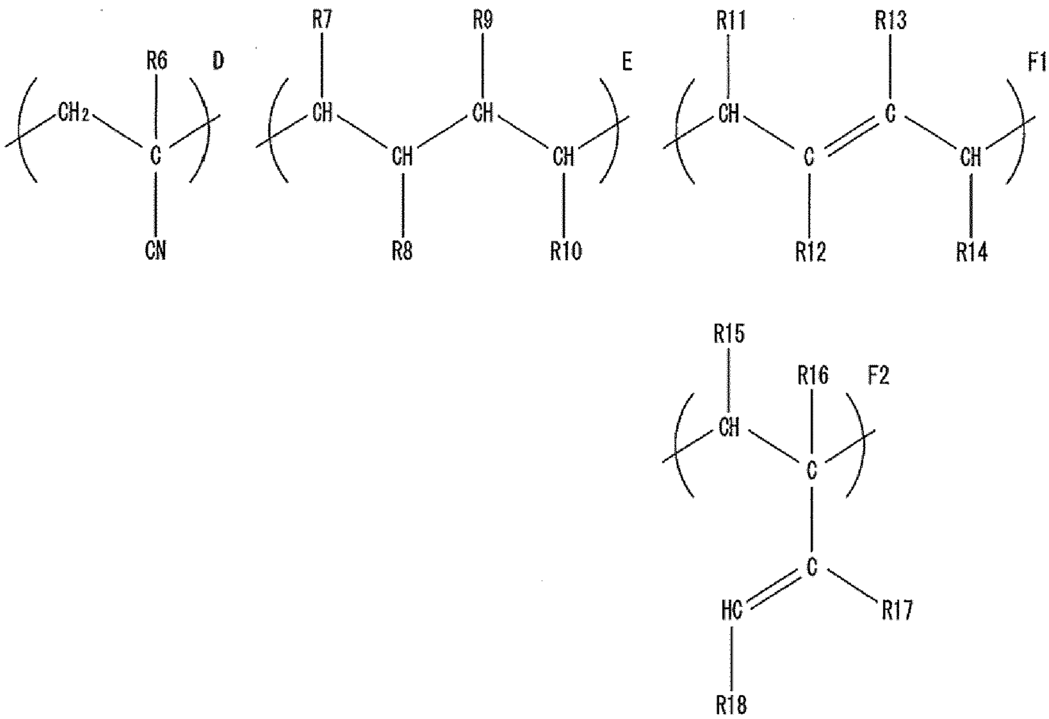

(R6: H or a methyl group, R7 to R18: H, or an alkyl group or an alkenyl group having 1 to 4 carbon atoms)

With reference to Formula III as a cut part of the aforementioned copolymer, a relationship between a copolymer

in which acrylonitrile, butadiene, and alkyl are polymerized, and their respective repeating units A, B, and C is described. Formula III is a cut part of chains of the polymer used for the protective layer 3, in which 1,3-butadiene (repeating unit F1), acrylonitrile (repeating unit D), and 1,3-butadiene (repeating unit F1) are sequentially bonded. Formula III shows a bonding example in which R7, and R11 to R14 denote H. In Formula III, a side to which a cyano group (-CN) of acrylonitrile is bonded is bonded to butadiene on the left, and butadiene on the right is formed on a side to which the cyano group (-CN) of acrylonitrile is not bonded. In such a bonding example, one repeating unit A, one repeating unit B, and two repeating units C are contained. Among these, the repeating unit A contains a carbon atom to which a carbon atom on the right of butadiene on the left and the cyano group (-CN) of acrylonitrile are bonded, and the repeating unit B has a combination containing a carbon atom to which the cyano group (-CN) of acrylonitrile is not bonded and a carbon atom on the left of butadiene on the right. The carbon atom on the leftmost of butadiene on the left and the carbon atom on the rightmost of butadiene on the right serve as carbon atoms as part of a repeating unit A or a repeating unit B depending on the kind of molecules to which they are bonded.

Formula III:

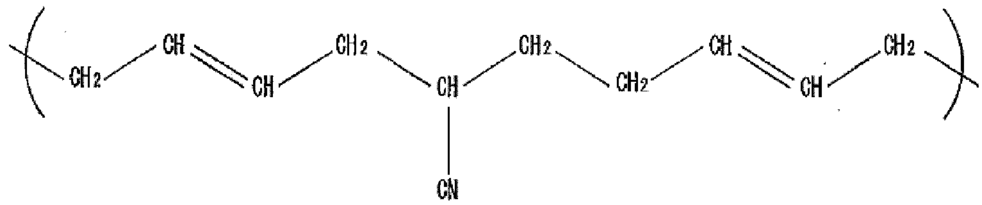

The lower limit of the content of the repeating unit A of Formula I in the polymer is 5 wt% or more with respect to the entire polymer. Preferably, it is 15 wt% or more. More preferably, it is 25 wt% or more. Further, the upper limit thereof is 100 wt% or less. Preferably, it is 60 wt% or less. More preferably, it is 40 wt% or less. When the content falls within the above described range, good heat insulating properties can be given to the infrared reflective film.

The lower limit of the thickness of the protective layer 3 is 1 ↔m or more. Preferably, it is 2 ↔m or more. Further, the upper limit thereof is 20 ↔m or less. Preferably, it is 15 ↔m or less. More preferably, it is 10 ↔m or less. When the protective layer 3 has a small thickness, the abrasion resistance is impaired, whereas the reflective properties for infrared radiation are increased. As a result, functions as the protective layer 3 cannot be sufficiently exerted. When the protective layer 3 has a large thickness, the heat insulating properties of the infrared reflective substrate are deteriorated. When the protective layer 3 has a thickness within the aforementioned range, the protective layer 3 having low absorption of infrared radiation and being capable of suitably protecting the reflective layer 2 is obtained.

It should be noted that, as prescribed in JIS R3106, the normal emissivity is expressed as: Normal emissivity

(εn) = 1 ✣ Spectral reflectivity (pn).

The spectral reflectivity pn is measured in the wavelength range 5 to 50 ↔m of thermal radiation at room temperature. The wavelength range 5 to 50 ↔m is in the far infrared radiation region. The higher the reflectance in the wavelength range of far infrared radiation, the lower the normal emissivity.

In Formula I, the ratio of k, l, and m is preferably k:l:m = 3 to 30:20 to 95:0 to 60, more preferably k:l:m = 5 to 25:60 to 90:0 to 20, further preferably k:l:m = 15 to 25:65 to 85:0 to 10, when the total of k, l, and m is 100.

Further, the ratio of the repeating units A, B, and C in Formula I is preferably A:B:C = 5 to 50 wt%:25 to 85 wt%:0 to 60 wt% (however, the total of A, B, and C is 100 wt%). More preferably, it is A:B:C = 15 to 40 wt%:55 to 85 wt%:0 to 20 wt% (however, the total of A, B, and C is 100 wt%). Further preferably, it is A:B:C = 25 to 40 wt%:55 to 75 wt%:0 to 10 wt% (however, the total of A, B, and C is 100 wt%).

The protective layer 3 is formed by a procedure in which a polymer composition solution is prepared by dissolving the aforementioned polymer in a solvent (together with a cross-linking agent, as needed), and this solution is applied onto the reflective layer 2, followed by drying the solution (volatilizing the solvent). The solvent is a solvent in which the aforementioned polymer is soluble, and a solvent such as methyl ethyl ketone is used therefor, for example.

In order to impart good solvent resistance to the protective layer 3, it is preferable that the polymer of the protective layer 3 have a cross-linked structure. When the polymer is cross-linked, the solvent resistance of the protective layer 3 is improved, and therefore it is possible to prevent elution of the protective layer 3 even if a polymer-soluble solvent is in contact with the protective layer 3.

As a technique to give a cross-linked structure to the polymer, electron beam irradiation after drying the solution can be mentioned. In the case where the polymer contained in the protective layer 3 is a compound represented by Formula I above, the lower limit of the dose of electron beam irradiation is 30 kGy or more. Further, the upper limit thereof is 600 kGy or less. Preferably, it is 400 kGy or less. More preferably, it is 200 kGy or less. When the dose of electron

beam irradiation falls within the aforementioned range, the polymer can be sufficiently cross-linked. Further, when the dose of electron beam irradiation falls within the aforementioned range, it is possible to suppress yellowing of the polymer or the backing 1 caused by electron beam irradiation to the minimum, so that an infrared reflective substrate having less coloration can be obtained. Such electron beam irradiation is performed under conditions of an acceleration voltage of 100 kV to 150 kV.

Further, in the case where the polymer contained in the protective layer 3 is a compound other than the compound represented by Formula I, that is, one of olefin polymers such as polyethylene and polypropylene, cycloolefin polymers such as polynorbornene, polystyrene, polyvinylidene fluoride, polymethyl acrylate, polyvinyl chloride, polyvinyl alcohol, polyamide, acrylonitrile, a copolymer containing monomer components of these polymers as constituent units, a hydride of the copolymer, and the like, the lower limit of the dose of electron beam irradiation is 60 kGy or more. More preferably, it is 75 kGy. Further, the upper limit thereof is 150 kGy or less. Preferably, it is 125 kGy or less. When the dose of electron beam irradiation falls within the aforementioned range, an infrared reflective substrate having good abrasion resistance can be obtained. Such electron beam irradiation is performed under irradiation conditions of an acceleration voltage of 100 kV to 150 kV.

Further, when the polymer is dissolved in a solvent, or after the polymer is dissolved in a solvent, a cross-linking agent, such as polyfunctional monomers, e.g., radical polymerizable monomers, is preferably added to the polymer composition solution. Particularly, radical polymerizable monomers of (meth)acrylate monomers are preferable. Addition of such polyfunctional monomers facilitates the cross-linking of the polymer (via the polyfunctional monomers) by reaction (bonding) of the functional groups contained in the polyfunctional monomers with the respective polymer chains. Accordingly, even if the dose of electron beam irradiation is reduced (to 70 kGy or less, for example, to about 50 kGy), the polymer can be sufficiently cross-linked. Therefore, a low dose of electron beam irradiation can be achieved. Further, such a reduction in dose of electron beam irradiation can further suppress yellowing of the polymer or the backing 1, and also can improve the productivity.

However, when the amount of cross-linking agent increases, the normal emissivity on the surface on the protective layer 3 side (with respect to the reflective layer 2) of the infrared reflective substrate is deteriorated. When the normal emissivity is deteriorated, the infrared reflective properties of the infrared reflective substrate are reduced, and the heat insulating properties of the infrared reflective substrate are degraded. Therefore, it is preferable that the polymer composition solution contain 5 to 35 wt% of the cross-linking agent with respect to 100 wt% of the polymer (that is, 5 to 35 parts by weight with respect to 100 parts by weight of the polymer). More preferably, the content is 1 to 20 wt% with respect to 100 wt% of the polymer (that is, 1 to 20 parts by weight with respect to 100 parts by weight of the polymer).

Further, it is preferable that the protective layer 3 have an average value of transmittance of far infrared radiation in a wavelength region of 2.5 ↔m to 25 ↔m per 15-↔m thickness of 65% or more. Further, the transmittance of far infrared radiation is preferably 68% or more, further preferably 70% or more. When the transmittance of far infrared radiation is 65% or more, far infrared radiation incident on the protective layer 3 from the outside is more easily transmitted to the reflective layer 2. This can further suppress a decrease in the normal emissivity on the surface on the protective layer 3 side (with respect to the reflective layer 2) of the infrared reflective substrate.

The transmittance of far infrared radiation can be obtained by measuring the transmittance of infrared radiation in the wavelength region of 2.5 to 25 ↔m when only the protective layer 3 is irradiated with far infrared radiation, using a Fourier transform infrared spectrophotometer (FT-IR) (manufactured by JASCO Corporation), calculating an average value therefrom, and converting the obtained value into a numerical value per 15-↔m thickness.

The layer structure of the infrared reflective substrate according to this embodiment is as described above. Next, a method for producing an infrared reflective substrate according to this embodiment is described.

The method for producing an infrared reflective substrate according to this embodiment includes a step of forming the reflective layer 2 on the one surface 1a of the backing 1, a step of forming the protective layer 3 by applying a polymer composition solution obtained by dissolving such a polymer as mentioned above in a solvent onto the reflective layer 2, followed by drying the solution, and a step of subjecting the protective layer 3 to electron beam irradiation.

Further, in the method for producing an infrared reflective substrate according to this embodiment, the polymer composition solution prepared as above further contains 1 wt% to 20 wt% of radical polymerizable monomers with respect to 100 wt% of the polymer (that is, 1 part by weight to 20 parts by weight with respect to 100 parts by weight of the polymer). In this embodiment, (meth)acrylate monomers are employed as the radical polymerizable monomers.

In the step of forming the reflective layer 2 on the one surface 1a of the backing 1, DC magnetron sputtering, which will be described below, is employed. More specifically, using DC magnetron sputtering, the metal oxide layer 2b composed of indium tin oxide is formed on the one surface 1a of the backing 1, the semi-transparent metal layer 2a composed of Ag-Pd-Cu alloy is formed thereon, and the metal oxide layer 2c composed of indium tin oxide is formed further thereon. The thickness of the metal oxide layers 2b and 2c is preferably in the range of 5 to 50 nm, further preferably in the range of 15 to 40 nm, in order to obtain an infrared reflective substrate having high transparency (visible light transmittance) in a practical use, though it depends also on the refractive index of produced layers.

Further, in the step of forming the protective layer 3 on the reflective layer 2, the protective layer 3 is formed by applying a polymer composition solution obtained by dissolving the aforementioned polymer in a solvent onto the reflective layer 2 that is formed on the one surface 1a of the backing 1, using an applicator, or the like, followed by drying the solution (volatilizing the solvent). Then, in the step of subjecting the protective layer 3 to electron beam irradiation, the protective layer 3 is subjected to electron beam irradiation from its surface side using an electron beam irradiation apparatus, which will be described below. Thus, the infrared reflective substrate according to this embodiment is completed.

The infrared reflective substrate of this embodiment produced by the production method as described above has a normal emissivity on the surface on the protective layer 3 side (with reference to the reflective layer 2) which is reduced due to a reduction in the thickness of the layer structure on the reflective layer 2, that is, the thickness of the protective layer 3. The normal emissivity is further reduced also by using a material that is particularly less likely to absorb far infrared radiation, but likely to transmit far infrared radiation, such as nitrile rubber, hydrogenated nitrile rubber, completely hydrogenated nitrile rubber, and polypropylene, as the protective layer 3. This makes it difficult for the protective layer 3 to absorb far infrared radiation incident on the protective layer 3, so that the far infrared radiation reaches the reflective layer 2. As a result, the far infrared radiation is more likely to be reflected by the reflective layer 2. Accordingly, it is possible to block far infrared radiation outgoing from the indoor passing through a translucent member such as a window glass by attaching the infrared reflective substrate according to this embodiment to the translucent member from the indoor side, which allows a heat insulating effect to be expected, during winter or night when the indoor temperature decreases. For this purpose, the normal emissivity on the surface of the protective layer 3 side of the infrared reflective substrate according to this embodiment is set to 0.40 or less. However, the normal emissivity is preferably 0.30 or less, more preferably 0.25 or less, further preferably 0.15 or less.

Further, in the infrared reflective substrate according to this embodiment produced by the production method as described above, the translucency of the translucent member is not inhibited by increasing the visible light transmittance (see JIS A5759). For this purpose, the visible light transmittance of the infrared reflective substrate according to this embodiment is set to 50% or more.

Further, it is made difficult for (the tacky layer 4 and) the backing 1 to absorb near infrared radiation incident on (the tacky layer 4 and) the backing 1, so that the near infrared radiation reaches the reflective layer 2. As a result, the near infrared radiation is more likely to be reflected by the reflective layer 2. Accordingly, it is possible to block near infrared radiation entering the indoor passing through a translucent member such as a window glass by attaching the infrared reflective substrate according to this embodiment to the translucent member such as a window glass from the indoor side, which allows a thermal barrier effect to be expected during summer, in the same manner as in conventional infrared reflective substrates.

Further, according to the infrared reflective substrate of this embodiment produced by the production method as described above, good abrasion resistance is imparted to the protective layer 3, as described above. That is, the polymer in the protective layer 3 is cross-linked, thereby improving the solvent resistance of the protective layer 3. This can prevent elution of the protective layer 3 even if a polymer-soluble solvent comes into contact with the protective layer 3, and therefore can prevent a reduction in abrasion resistance due to exposure of the infrared reflective layer 2. For this purpose, the gel fraction of the infrared reflective substrate according to this embodiment after the solubility test in methyl ethyl ketone is set to 70% or more. However, it is preferably 75% or more. More preferably, it is 80% or more.

Further, in the case where the protective layer 3 contains a polymer having excellent solvent resistance, it is possible to prevent separation due to physical abrasion by cross-linking of the polymer in the protective layer 3, and therefore to prevent a decrease in abrasion resistance due to exposure of the infrared reflective layer 2.

Further, in the method for producing an infrared reflective substrate according to this embodiment, the polymer composition solution prepared as above further contains 1 part by weight to 20 parts by weight of radical polymerizable monomers with respect to 100 parts by weight of the polymer, which facilitates the cross-linking of the polymer in the protective layer 3 via the radical polymerizable monomers. As a result, even if the dose of electron beam irradiation is reduced (to 70 kGy or less, for example, about 50 kGy), the polymer can be sufficiently cross-linked. Therefore, a low dose of electron beam irradiation can be achieved.

Further, the solvent resistance of the protective layer 3 is improved by the cross-linking of the polymer in the protective layer 3 via radical polymerizable monomers. This can prevent elution of the protective layer 3 even if a polymer-soluble solvent comes into contact with the protective layer 3. Therefore, it is possible to prevent a decrease in abrasion resistance due to exposure of the reflective layer 2.

## Second embodiment

Hereinafter, a second embodiment of the method for producing an infrared reflective substrate according to the present invention is described. First, the layer structure of the infrared reflective substrate according to this embodiment is described with reference to Fig. 2. The infrared reflective substrate according to this embodiment has heat

insulating properties (reflective properties for far infrared radiation), in addition to thermal barrier properties (reflective properties for near infrared radiation) of conventional infrared reflective substrates.

As shown in Fig. 2, the infrared reflective substrate according to this embodiment has the same configuration as the infrared reflective substrate according to the first embodiment, except that an easy adhesive layer 5 is formed on the reflective layer 2 (between the reflective layer 2 and the protective layer 3). Thus, the same configuration is denoted by the same reference numeral, and the detailed description thereof is not repeated.

In this embodiment, a silane coupling agent may be used as the easy adhesive layer 5. However, there is no limitation to this.

The silane coupling agent is an organic silicon compound composed of an organic material and silicon, and has different reactive groups in one molecule. More specifically, the silane coupling agent has an organic functional group that is reactive or interactive with an organic material (such as a vinyl group, a (meth) acrylic group, an isocyanate group, an epoxy group, an amino group, a mercapto group, a styryl group, a sulfide group, or the like) and a hydrolyzable group in one molecule. The silane coupling agent forms a chemical bond with the organic material via the organic functional group using the structure of the reactive group, and forms a chemical bond, for example, with an inorganic surface by subjecting the hydrolyzable group to hydrolysis and reaction, thereby allowing compounds having different chemical properties to be strongly bonded to each other. In the following examples, a vinyl silane coupling agent is used. Although a vinyl silane coupling agent is used in the examples, the silane coupling agent is not limited thereto.

The easy adhesive layer 5 is formed by a procedure in which a solution is prepared by dissolving the aforementioned compounds in a solvent, the solution is applied onto the reflective layer 2, followed by drying the solution (volatilizing the solvent), and the protective layer 3 is irradiated with an electron beam as an active energy ray from its surface side. The active energy ray is an energy ray that promotes chemical reactions or physical changes. In this embodiment, the active energy ray acts to promote the formation of the chemical bond between the protective layer 3 and the easy adhesive layer 5. More specifically, after the solution is applied onto the reflective layer 2, followed by drying the solution (volatilizing the solvent), the protective layer 3 is formed thereon, and the protective layer 3 is irradiated with an active energy ray such as an electron beam from its surface side. Thereby, a chemical bond such as a cross-linking structure is formed between the protective layer 3 and the easy adhesive layer 5, so that the protective layer 3 and the easy adhesive layer 5 are bonded to each other. By forming the easy adhesive layer 5 between the reflective layer 2 and the protective layer 3 in this way, the adhesion between the protective layer 3 and the reflective layer 2 is enhanced. Therefore, exposure of the reflective layer 2 having low abrasion resistance due to separation of the protective layer 3 from the reflective layer 2 is made less likely to occur.

The configuration of the infrared reflective substrate according to this embodiment is described as above. Next, the method for producing an infrared reflective substrate according to this embodiment is described. The method for producing an infrared reflective substrate according to this embodiment is the same as the method for producing an infrared reflective substrate according to the first embodiment, except for including a step of forming the easy adhesive layer 5 on the reflective layer 2 (between the reflective layer 2 and the protective layer 3). Therefore, the detailed description thereof is omitted.

In the step of forming the easy adhesive layer 5 on the reflective layer 2, after the reflective layer 2 is formed on the one surface 1a of the backing 1, in the same manner as in the method for producing an infrared reflective substrate according to the first embodiment, the easy adhesive layer 5 is formed by applying a solution, which is obtained by dissolving the aforementioned silane coupling agent in a solvent, onto the reflective layer 2 using a wire bar, or the like, followed by drying the solution. Thereafter, the protective layer 3 is formed on the easy adhesive layer 5, and the protective layer 3 is subjected to electron beam irradiation from its surface side using the aforementioned electron beam irradiation apparatus. Thus, the infrared reflective substrate according to this embodiment is completed.

According to this embodiment, the above described production method for producing the infrared reflective substrate further includes the step of forming the easy adhesive layer 5 on the reflective layer 2 (between the reflective layer 2 and the protective layer 3). Therefore, the easy adhesive layer 5 is chemically bonded to the protective layer 3, and the reflective layer 2 and the protective layer 3 are adhered to each other via the easy adhesive layer 5, as described above, thereby enhancing the adhesiveness between the reflective layer 2 and the protective layer 3, in addition to exerting the same effects as the aforementioned infrared reflective substrate according to the first embodiment. Therefore, even if the protective layer 3 is subjected to an external stress, the protective layer 3 is less likely to separate from the reflective layer 2. Accordingly, it is possible to prevent the situation where the reflective layer 2 having a low abrasion resistance is exposed due to separation of the protective layer 3 and the reflective layer 2 is damaged.

## Third embodiment

Hereinafter, a third embodiment of the method for producing an infrared reflective substrate according to the present invention is described. First, the layer structure of the infrared reflective substrate according to this embodiment is described with reference to Fig. 3.

As shown in Fig. 3, the infrared reflective substrate according to this embodiment has the same configuration as the infrared reflective substrates according to the first, second, and third embodiments, except that the protective layer 3 that is a film is layered on the reflective layer 2 via an adhesive layer 6. Thus, the same configuration is denoted by the same reference numeral, and the detailed description thereof is not repeated.

In this embodiment, the protective layer 3 is formed as a film, for example, by a procedure in which the aforementioned polymer composition solution is prepared by dissolving the aforementioned polymer in a solvent (together with the aforementioned cross-linking agent, as needed), this solution is applied onto a support plate (not shown) instead of the aforementioned backing 1, followed by drying, and thereafter the thus formed film is separated from the support plate.

Further, as the protective layer 3, a biaxially stretched film produced by stretching a film containing the aforementioned polymer using a known method may be used. Further, a commercially available biaxially stretched film also may be used, and examples of such a biaxially stretched film include "TORAYFAN (registered trademark)", manufactured by Toray Industries, Inc. Also in this case, in the same manner as above, the lower limit of the thickness of the protective layer 3 is 5↔m or more, and the upper limit thereof is 30↔m or less.

In this embodiment, a polyester adhesive agent is used as the adhesive layer 6. In this embodiment, a polyester adhesive agent is used as the adhesive layer 6. However, there is no limitation to this. The thickness of the adhesive layer 6 is preferably 0.1 to 1.5 ↔m.

The configuration of the infrared reflective substrate according to this embodiment is as described above. Next, the method for producing an infrared reflective substrate according to this embodiment is described. The method for producing an infrared reflective substrate according to this embodiment is the same as the method for producing an infrared reflective substrate according to the first embodiment, except that a film containing the aforementioned polymer is used as the protective layer 3, and the step of layering the reflective layer 2 with the protective layer 3 includes a step of layering the protective layer 3 on the reflective layer 2 via the adhesive layer 6. Therefore, the detailed description thereof is not repeated.

In the step of layering the reflective layer 2 with the protective layer 3, the adhesive agent as described above is applied onto one surface 3a of the protective layer 3, and this is layered on the reflective layer 2, followed by drying. Thereafter, the protective layer 3 is subjected to electron beam irradiation from its surface side using the aforementioned electron beam irradiation apparatus. Thus, the infrared reflective substrate according to this embodiment is completed.

It should be noted that the production method of this embodiment may include a step of layering the protective layer 3 in the form of a film after electron beam irradiation on the reflective layer 2, instead of the step of layering the protective layer 3 in the form of a film on the reflective layer 2 and thereafter subjecting the protective layer 3 to electron beam irradiation, as described above. Either method is included in the production method of the present invention.

Further, according to the method for producing an infrared reflective substrate which includes, after subjecting the protective layer 3 to electron beam irradiation, the step of layering the irradiated protective layer 3 on the reflective layer 2, the protective layer 3 irradiated with an electron beam can be obtained without irradiating the backing 1 and the reflective layer 2 with the electron beam, in addition to the same effects as the above described method for producing an infrared reflective substrate according to the first embodiment can be obtained. Thus, an infrared reflective substrate in which damage (such as yellowing and a decrease in mechanical strength) to the backing 1 due to electron beam irradiation is suppressed can be obtained.

## Fourth embodiment

Hereinafter, a fourth embodiment of the method for producing an infrared reflective substrate according to the present invention is described.

As shown in Fig. 4, the infrared reflective substrate according to this embodiment has the same configuration as the infrared reflective substrate according to the first embodiment, except that the backing 1 is not provided, the protective layer 3 and the reflective layer 2 are directly layered (specifically, the reflective layer is formed directly on the one surface 3a of the protective layer 3), and the protective layer 3 is the same film as in the third embodiment. Thus, the same configuration is denoted by the same reference numeral, and the detailed description thereof is not repeated.

Further, the method for producing an infrared reflective substrate according to this embodiment is the same as the method for producing an infrared reflective substrate according to the first embodiment, except that the same film as in the third embodiment is used as the protective layer 3, and a step of forming the reflective layer 2 on the one surface 3a of the protective layer 3 is provided as the step of layering the reflective layer 2 with the protective layer 3. Therefore, the detailed description thereof is not repeated.

In the step of forming the reflective layer 2 on the one surface 3a of the protective layer 3, the reflective layer 2 is formed on the one surface 3a of the protective layer 3 that is the same as that of the third embodiment in the same manner as in the first embodiment. That is, the reflective layer 2 is formed on the one surface 3a of the protective layer 3 that is a film, instead of the one surface 1a of the backing 1 in the first embodiment, in the same manner as in the first

embodiment. Thereafter, the protective layer 3 is subjected to electron beam irradiation from its surface side using the aforementioned electron beam irradiation apparatus. Thus, the infrared reflective substrate according to this embodiment is completed. Also in this embodiment, the reflective layer may be formed, after the protective layer 3 is subjected to electron beam irradiation, on the one surface 3a of the protective layer 3 that has been irradiated with the electron beam, in the same manner as in the above described third embodiment.

## EXAMPLES

The inventors produced infrared reflective substrates according to the present embodiments (Examples), and further produced infrared reflective substrates for comparison (Comparative Examples).

The examples and comparative examples are each produced as follows. A polyethylene terephthalate substrate having a thickness of 50 ↔m (product name "DIAFOIL T602E50", manufactured by Mitsubishi Plastics, Inc.) was used as a backing 1. A reflective layer 2 was formed on one surface 1a of the backing 1 by DC magnetron sputtering. Specifically, using DC magnetron sputtering, a metal oxide layer 2b made of indium tin oxide with a thickness of 35 nm was formed on the surface 1a of the backing 1, a semi-transparent metal layer 2a made of Ag-Pd-Cu alloy with a thickness of 18 nm was formed thereon, and a metal oxide layer 2c made of indium tin oxide with a thickness of 35 nm was formed further thereon. Thus, the reflective layer 2 was formed. Then, a protective layer 3 was formed on the reflective layer 2. It should be noted that formation conditions of the protective layer 3 will be described in detail in the respective examples and comparative examples.

### Example 1

A protective layer 3 was formed by coating on a reflective layer 2 that was produced using the above described production method. Specifically, a 10%-methyl ethyl ketone (MEK) solution of hydrogenation nitrile rubber (product name "Therban 5065", manufactured by LANXESS) [k:33.3, I:63, m:3.7, R1 to R3:H] was applied onto the reflective layer 2 using an applicator, which was dried at 120°C for two minutes in an air circulating drying oven. Thus, the protective layer 3 having a thickness of 5 ↔m was formed. Thereafter, it was subjected to electron beam irradiation from the surface side of the protective layer 3 using an electron beam irradiation apparatus (product name "EC250/30/20mA", manufactured by IWASAKI ELECTRIC CO., LTD.). Thus, an infrared reflective substrate according to Example 1 was obtained. The electron beam irradiation was performed under the conditions of: a line speed of 3 m/min, an acceleration voltage of 150 kV, and an irradiation dose of 100 kGy.

### Example 2

Example 2 was the same as Example 1, except that electron beam irradiation was performed at an irradiation dose of 200 kGy.

### Example 3

Example 3 was the same as Example 1, except that 5 wt% (5 parts by weight) of (meth)acrylate monomers (product name "Viscoat #295", manufactured by Osaka Organic Chemical Industry Ltd.) was added to a 10%-methyl ethyl ketone (MEK) solution of hydrogenation nitrile rubber (product name "Therban 5065", manufactured by LANXES) [k:33.3, I:63, m:3.7, R1 to R3:H] with respect to the solid content of hydrogenation nitrile rubber, and electron beam irradiation was performed at an irradiation dose of 50 kGy.

### Example 4

Example 4 was the same as Example 3, except that 10 wt% (10 parts by weight) of (meth)acrylate monomers (product name "Viscoat #295", manufactured by Osaka Organic Chemical Industry Ltd.) was added to a 10%-methyl ethyl ketone (MEK) solution of hydrogenation nitrile rubber (product name "Therban 5065", manufactured by LANXES) [k:33.3, I:63, m:3.7, R1 to R3:H] with respect to the solid content of hydrogenation nitrile rubber.

### Example 5

Example 5 was the same as Example 3, except that 15 wt% (15 parts by weight) of (meth)acrylate monomers (product name "Viscoat #295", manufactured by Osaka Organic Chemical Industry Ltd.) was added thereto with respect to the solid content of hydrogenation nitrile rubber.

Example 6

Example 6 was the same as Example 3, except that 20 wt% (20 parts by weight) of (meth)acrylate monomers (product name "Viscoat #295", manufactured by Osaka Organic Chemical Industry Ltd.) was added thereto with respect to the solid content of hydrogenation nitrile rubber.

Example 7

Example 7 was the same as Example 1, except that "Therban 5005" (product name) (manufactured by LANXESS) [k:33.3, l:66.7, m:0, R1 to R3:H] 5005 was used as hydrogenation nitrile rubber instead of the aforementioned "Therban 5065" (product name).

Comparative Example 1

Comparative Example 1 was the same as Example 1, except that no electron beam irradiation was performed.

Example 8

Example 8 was the same as Example 1, except that the protective layer 3 composed of a biaxially stretched polypropylene (OPP) film ("TORAYFAN", manufactured by Toray Industries, Inc.) with a thickness of 15 ↔m was layered on the reflective layer 2 via a polyester adhesive agent (the adhesive layer 6) with a thickness of 0.8 ↔m, instead of forming the protective layer 3 on the reflective layer 2 by coating, and electron beam irradiation was performed at an acceleration voltage of 100 kV and an irradiation dose of 100 kGy.

Example 9

Example 9 was the same as Example 8, except that electron beam irradiation was performed at an acceleration voltage of 150 kV and an irradiation dose of 100 kGy.

Comparative Example 2

Comparative Example 2 was the same as Example 8, except that no electron beam irradiation was performed.

Comparative Example 3

An infrared reflective film was produced by the same method as in Example 1, except that a polyethylene terephthalate film (product name "DIAFOIL T609E25", manufactured by Mitsubishi Chemical Corporation) with a thickness of 23 ↔m was used instead of "Therban 5065" as the protective layer 3, this film was attached onto the surface of the reflective layer 2 via a polyester adhesive agent (the adhesive layer 6) with a thickness of 80 nm, and this film was not subjected to electron beam irradiation.

Comparative Example 4

A hard coat layer (obtained by applying "acrylic-urethane hard coat PC1097" (product name), manufactured by DIC Corporation, followed by ultraviolet curing) with a thickness of 4.9 ↔m was used instead of "Therban 5065" as the protective layer 3. A material for forming this hard coat layer was applied onto the surface of the reflective layer 2 via a polyester adhesive agent (the adhesive layer 6) with a thickness of 80 nm. Thus, a hard coat layer was formed on the reflective layer 2. Further, this hard coat layer was not subjected to electron beam irradiation. Other than these points, an infrared reflective film was produced by the same method as in Example 1.

Evaluation

For each of Examples 1 to 7 and Comparative Example 1, the gel fraction and the normal emissivity of the infrared reflective substrate according to the above described embodiments were measured by the following methods. Together with that, the transmittance of far infrared radiation in a wavelength region of 2.5 ↔m to 25 ↔m by the protective layer per 15-↔m thickness was measured by the following method.
Further, for each of Examples 8 and 9, and Comparative Examples 2 to 4, the normal emissivity of the infrared reflective substrate according to the above described embodiments was measured by the following method. Further, for

these infrared reflective substrates, an abrasion test was conducted by the following method instead of a solvent resistance test because the protective layer 3 was insoluble in methyl ethyl ketone. Further, an average value of the transmittance of far infrared radiation in a wavelength region of 2.5 ↔m to 25 ↔m by the protective layer per 15-↔m thickness was measured by the following method.

Table 1 and Table 2 show these results.

The solvent resistance test of the protective layer 3 in Examples 1 to 7 and Comparative Example 1 was as follows. First, 100 mg of the protective layer covered by a Teflon (registered trademark) film was prepared. It was immersed in a methyl ethyl ketone solvent. The immersion period was one week. Thereafter, it was dried at 110°C for two hours. After drying, its weight was measured, so that the gel fraction was calculated from a change in the weight before and after the immersion in the solvent. The calculation was performed using the following equation.

Gel fraction (%) = (Weight (g) after immersion in solvent/Weight (g) before immersion in solvent) ✣ 100

The normal emissivity was determined, in accordance with JIS R 3106-2008 (test method for the transmittance, reflectance, emittance, and solar heat gain coefficient of flat glasses), by measuring an infrared specular reflectance at a wavelength of 5 ↔m to 25 -m using a Fourier transform infrared (FT-IR) spectrometer equipped with angle variable reflection accessories (product name: "FTS7000S", manufactured by Varian Medical Systems, Inc.).

The transmittance of far infrared radiation by the infrared reflective substrates of Examples 1 to 9 and Comparative Examples 1 to 4 was measured as follows. Using a Fourier transform infrared spectrophotometer (FT-IR), JASCO FT/IR-230 (manufactured by JASCO Corporation), the transmittance of infrared radiation in a wavelength region of 2.5 ↔m to 25 ↔m by the protective layer 3 when only the protective layer 3 is irradiated with far infrared radiation was measured, and an average value was calculated therefrom. The thus obtained transmittance (average value) was converted into a transmittance per 15-↔m thickness. In the case of the examples of forming the protective layer 3 by coating, a plastic layer for use as the protective layer 3 was formed on a polyethylene terephthalate film subjected to a mold release treatment, in the same manner as in each example, and thereafter the plastic layer separated from the polyethylene terephthalate film was subjected to measurement of the transmittance of far infrared radiation. On the other hand, in the case of the examples of forming the protective layer 3 by attaching a plastic layer in the form of a film, the plastic layer was independently subjected to measurement of the transmittance of far infrared radiation.

The abrasion resistance test was performed as follows. Using a Gakushin-type rubbing tester, a test in which a sliding member is reciprocated 100 times while being abutted against a test sample (Examples 8 and 9, and Comparative Examples 2 to 4) with a cloth (calico No. 3) as a rubbing material under a load of 500 g was conducted. In this test, the cases where damage is observed by visual inspection on the entire surface of the protective layer 3 were evaluated as ✣ where no good abrasion resistance was exhibited, and the other cases were evaluated as o where good abrasion resistance was exhibited.

Table 1

| | Added amount of monomers (wt%) | Transmittance of far infrared radiation | Acceleration voltage (kV) | Irradiation dose (kGy) | Gel fraction | Normal emissivity |
|---|---|---|---|---|---|---|
| Ex. 1 | 0 | 80% | 150 | 100 | 74% | 0.11 |
| Ex. 2 | 0 | 80% | 150 | 200 | 100% | 0.11 |
| Ex. 3 | 5 | 79% | 150 | 50 | 76% | 0.12 |
| Ex. 4 | 10 | 75% | 150 | 50 | 80% | 0.13 |
| Ex. 5 | 15 | 71% | 150 | 50 | 83% | 0.13 |
| Ex. 6 | 20 | 65% | 150 | 50 | 85% | 0.14 |

(continued)

| | Added amount of monomers (wt%) | Transmittance of far infrared radiation | Acceleration voltage (kV) | Irradiation dose (kGy) | Gel fraction | Normal emissivity |
|---|---|---|---|---|---|---|
| Ex. 7 | 0 | 82% | 150 | 100 | 75% | 0.11 |
| C. Ex. 1 | 0 | 80% | 0 | 0 | 3% | 0.11 |

Table 2

| | Type of protective layer | Transmittance of far infrared radiation | Acceleration voltage (kV) | Irradiation dose (kGy) | Normal emissivity | Abrasion resistance test |
|---|---|---|---|---|---|---|
| Ex. 8 | OPP | 82% | 100 | 100 | 0.19 | ○ |
| Ex. 9 | OPP | 82% | 150 | 100 | 0.19 | ○ |
| C. Ex. 2 | OPP | 82% | - | - | 0.19 | ✣ |
| C. Ex. 3 | PET | 63% | - | - | 0.78 | - |
| C. Ex. 4 | UV hard coat PC1097 | 45% | - | - | 0.52 | - |

As shown in Table 1, in the results of Examples 1 to 7, the infrared reflective substrate had a gel fraction of 70% or more and a normal emissivity of 0.20 or less. Thus, good results were obtained for both the gel fraction and the normal emissivity. Further, as shown in Table 2, in the results of Examples 8 and 9, the normal emissivity was 0.20 or less, and good abrasion resistance was exhibited as the resistance to physical abrasion. Accordingly, the infrared reflective substrate according to Examples can prevent the situation where the reflective layer 2 having a low abrasion resistance is exposed so as to be damaged.

Further, the infrared reflective substrate according to Examples having a normal emissivity of 0.20 or less allows far infrared radiation to reach the reflective layer 2 from the protective layer 3 side, as a result of which the far infrared radiation is more likely to be reflected by the reflective layer 2. Accordingly, it is possible to efficiently block far infrared radiation outgoing from the indoor to the outdoor passing through a translucent member such as a window glass, or the like, by attaching the infrared reflective substrate to the window glass, which allows a heat insulating effect to be expected. Further, near infrared radiation is less likely to be absorbed by the backing 1, even if it is incident on the backing 1, so as to reach the reflective layer 2, as a result of which the near infrared radiation is more likely to be reflected by the reflective layer 2. Accordingly, it is possible to block near infrared radiation entering the indoor passing through a translucent member such as a window glass by attaching the infrared reflective substrate according to this embodiment to the translucent member such as a window glass, which allows a thermal barrier effect during summer to be expected. It should be noted that, when the thickness of the adhesive layer 6 is about 0.8 ↔m, the influence of forming the adhesive layer 6 between the reflective layer 2 and the protective layer 3 on the normal emissivity can be reduced.

In the infrared reflective substrate according to Examples, the normal emissivity slightly increased (0.11 to 0.18) in Examples 1 to 7 with an increase in the added amount of (meth)acrylate monomers (hereinafter, referred to as radical polymerizable monomers) as radical polymerizable monomers to the protective layer 3. However, it was found that the addition of the radical polymerizable monomers to the protective layer 3 caused no influence on the normal emissivity, when the added amount was within the range of 5 to 20 wt% (5 to 20 parts by weight) with respect to the solid content of hydrogenation nitrile rubber.

Further, in the results of Comparative Example 1 in which no radical polymerizable monomers were added to the protective layer 3, and no electron beam irradiation was performed, the gel fraction was 3%, and thus good results were not obtained, though good normal emissivity (0.11) was obtained. Further, in the results of Comparative Example 2 in which a film serving as the protective layer 3 was attached to the reflective layer 2, and no electron beam irradiation was performed, the resistance to physical abrasion was insufficient, and thus good results were not obtained. Furthermore, in the results of Comparative Examples 3 and 4 in which a PET film or an acrylic-urethane hard coat layer was used as the protective layer 3, the normal emissivity was found to be adversely affected.

As described above, when the protective layer 3 after electron beam irradiation has a gel fraction of 70% or more, and the amount of radical polymerizable monomers added to the protective layer 3 is within the range of 5 to 20 parts by weight, an infrared radiation reflectivity substrate having both good gel fraction and good normal emissivity (infrared reflectance) can be obtained.

It should be noted that the infrared reflective substrate according to the present invention is not limited to the aforementioned embodiments, and various modifications can be made without departing from the gist of the present invention.

For example, in the aforementioned embodiments, the polymer composed of at least two repeating units of the repeating units A, B, and C is described as an example of polymers. However, the polymer composed of repeating units is not limited to this. Repeating units other than these repeating units also may be contained therein within a range not impairing the properties required as the protective layer. Examples of the other repeating units include styrene, alpha-methylstyrene, (meth)acrylic acid, methyl (meth)acrylate, ethyl (meth)acrylate, 2-hydroxyethyl (meth)acrylate, vinyl acetate, and (meth)acrylamide. The content of these units is preferably 10 wt% or less with respect to the entire polymer.

Further, in the aforementioned embodiments, the reflective layer 2 is formed by vapor deposition. However, there is no limitation to this.

Further, in the above described embodiments, (meth)acrylate monomers are used as radical polymerizable monomers that are added to the protective layer 3. However, there is no limitation to this.

Further, the infrared reflective substrate according to the aforementioned embodiments has both thermal barrier properties and heat insulating properties. However, there is no limitation to this. The infrared reflective substrate according to the present invention, of course, can be applied also to conventional infrared reflective substrates having only thermal barrier properties.

Further, the above described third and fourth embodiments describe an example of the method for forming the protective layer 3 that is a film. However, the method for forming the protective layer 3 that is a film is not limited to this.

Further, as an infrared reflective substrate and a method for producing the infrared reflective substrate according to another embodiment of the present invention, a backing as described in the first embodiment may be further layered on the reflective layer of the layered product of the reflective layer and the protective layer formed in the above described fourth embodiment, for example, other than the above described embodiments. In this case, the backing can be layered on the reflective layer via an adhesive layer as described in the third embodiment, for example. Further, a tacky layer as described in the first embodiment may be further layered on the reflective layer of the layered product of the reflective layer and the protective layer formed in the above described fourth embodiment, for example, other than the above described embodiments.

REFERENCE SIGNS LIST

| | |
|---|---|
| 1: | Backing |
| 1a: | One Surface |
| 1b: | The Other Surface |
| 2: | Reflective Layer |
| 2a: | Semi-Transparent Metal Layer |
| 2b, 2c: | Metal Oxide Layer |
| 3: | Protective Layer |
| 3a: | One Surface |
| 4: | Tacky Layer |
| 5: | Easy Adhesive Layer |
| 6: | Adhesive Layer |

**Claims**

1. A method for producing an infrared reflective substrate including a reflective layer and a protective layer that are layered with each other, the method comprising:

   a step of layering the reflective layer with the protective layer containing a polymer; and
   a step of subjecting the protective layer to electron beam irradiation.

2. The method for producing an infrared reflective substrate according to claim 1, wherein
   the infrared reflective substrate has the reflective layer, the protective layer, and further a backing, and
   the step of layering the reflective layer with the protective layer includes:

   a step of forming the reflective layer on one surface of the backing; and
   a step of forming the protective layer by applying a polymer composition solution obtained by dissolving the polymer in a solvent onto the reflective layer, followed by drying the solution.

3. The method for producing an infrared reflective substrate according to claim 1, wherein
   the infrared reflective substrate has the reflective layer, the protective layer, and further a backing, and
   the step of layering the reflective layer with the protective layer includes:

   a step of forming the reflective layer on one surface of the backing; and
   a step of bonding the protective layer that is a film having the polymer and the reflective layer to each other.

4. The method for producing an infrared reflective substrate according to claim 1, wherein
   the protective layer has a transmittance of far infrared radiation of 65% or more per 15-↔m thickness.

5. The method for producing an infrared reflective substrate according to claim 1, wherein
   the polymer exhibits a cross-linking reaction behavior by electron beam irradiation.

6. The method for producing an infrared reflective substrate according to claim 1, wherein
   the polymer is an olefin polymer or a cycloolefin polymer.

7. The method for producing an infrared reflective substrate according to claim 1, wherein
   the polymer contains at least two of the repetition units A, B, and C in Formula I below:

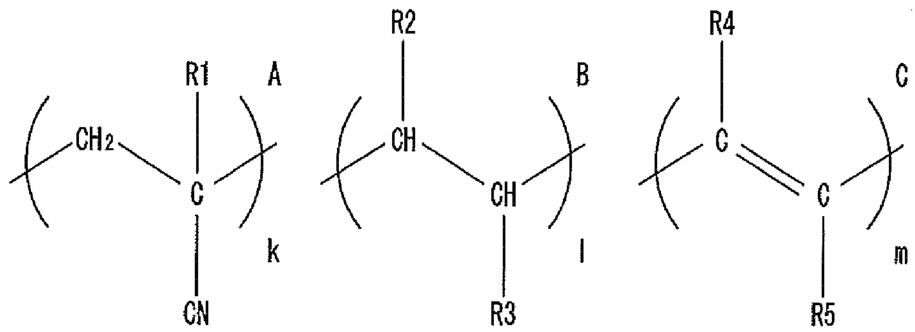

(R1: H or a methyl group, R2 to R5: H, or an alkyl group or an alkenyl group having 1 to 4 carbon atoms).

8. The method for producing an infrared reflective substrate according to claim 7, wherein
   the protective layer before the electron beam irradiation further contains 1 part by weight to 20 parts by weight of radical polymerizable monomers with respect to 100 parts by weight of the polymer.

9. The method for producing an infrared reflective substrate according to claim 1, wherein
   the protective layer after the electron beam irradiation has a gel fraction of 70% or more.

10. The method for producing an infrared reflective substrate according to claim 1, wherein
    the infrared reflective substrate has a normal emissivity of 0.40 or less on a surface on the protective layer side.

Fig. 1

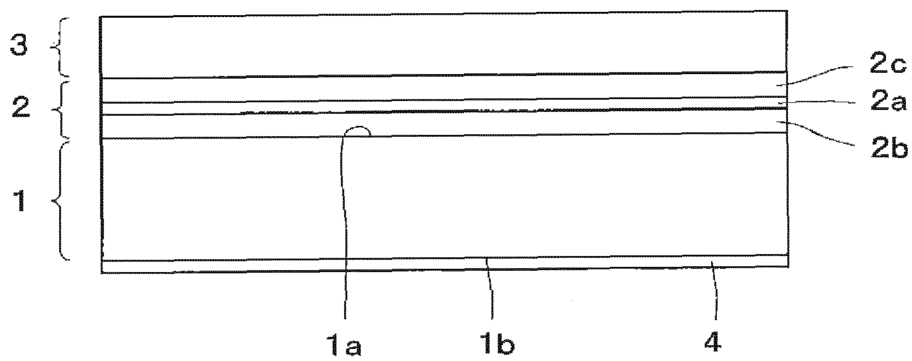

Fig. 2

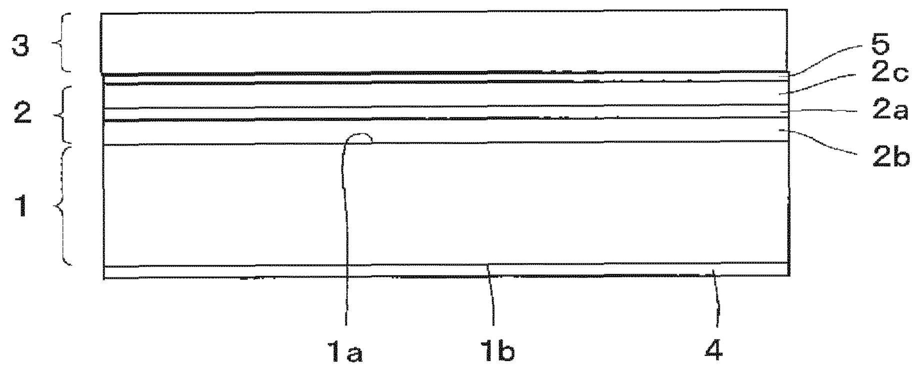

Fig. 3

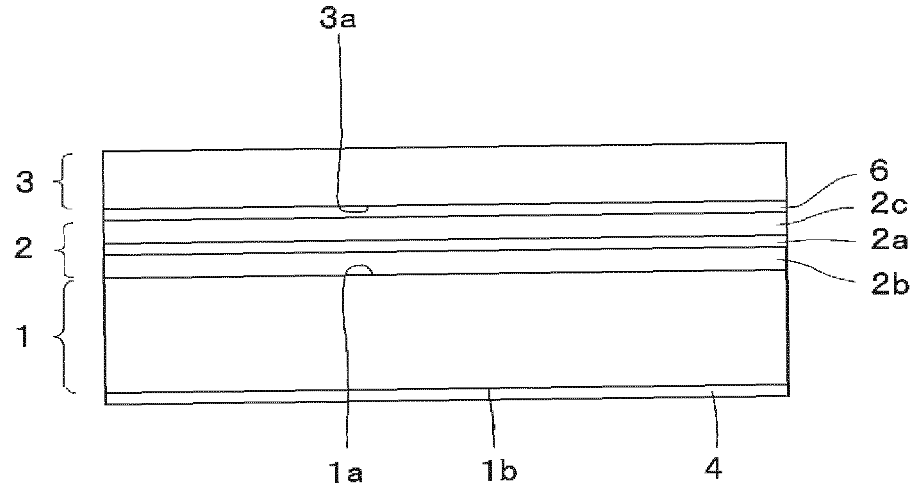

Fig. 4

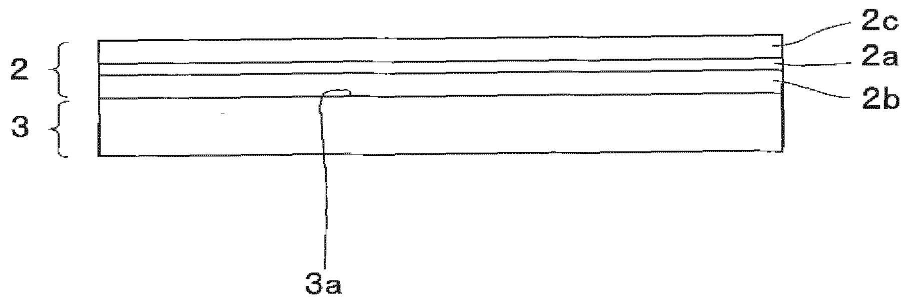

## INTERNATIONAL SEARCH REPORT

International application No.
PCT/JP2013/053747

A. CLASSIFICATION OF SUBJECT MATTER
*G02B5/26*(2006.01)i, *B05D3/06*(2006.01)i, *B32B27/16*(2006.01)i

According to International Patent Classification (IPC) or to both national classification and IPC

B. FIELDS SEARCHED

Minimum documentation searched (classification system followed by classification symbols)
G02B5/26, B05D3/06, B32B27/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2012-18228 A (Dainippon Printing Co., Ltd.), 26 January 2012 (26.01.2012), claims 1 to 6; paragraphs [0007], [0051] to [0056]; fig. 5 (Family: none) | 1,5,9<br>2-3<br>4,6-8,10 |
| Y<br>A | JP 2011-207223 A (Toray Industries, Inc.), 20 October 2011 (20.10.2011), paragraphs [0001] to [0007] (Family: none) | 1-6,9-10<br>7-8 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 April, 2013 (19.04.13) | 07 May, 2013 (07.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/053747

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 11-236467 A (Ciba Specialty Chemicals Holding Inc.),<br>31 August 1999 (31.08.1999),<br>paragraphs [0001] to [0002], [0021] to [0038], [0075]<br>& US 2001/0020047 A1 & US 2003/0013780 A1<br>& EP 921152 A2 & DE 69834092 T<br>& CA 2254663 A & ES 2260825 T<br>& CA 2254663 A1 | 1-6,9-10<br>7-8 |
| Y<br>A | JP 2007-528916 A (Sumitomo Chemical Co., Ltd.),<br>18 October 2007 (18.10.2007),<br>paragraph [0054]<br>& US 2007/0063191 A1 & US 2007/0102695 A1<br>& US 2011/0105711 A1 & GB 2424896 A<br>& WO 2005/049689 A2 & WO 2005/049548 A1<br>& DE 112004002221 T & KR 10-2006-0127853 A<br>& CN 1882632 A & KR 10-2012-0001810 A<br>& CN 102585172 A & TWB 00I364447<br>& TW 201229002 A | 2<br>1,3-10 |
| Y<br>A | JP 2011-104887 A (Nitto Denko Corp.),<br>02 June 2011 (02.06.2011),<br>paragraph [0013]<br>& US 2012/0268810 A1 & WO 2011/062084 A1<br>& TW 201125728 A & CN 102667545 A<br>& KR 10-2012-0094041 A | 3<br>1-2,4-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61051762 B